(19) **Europäisches Patentamt / European Patent Office / Office européen des brevets**

(11) **EP 4 572 469 A1**

(12) # EUROPEAN PATENT APPLICATION
published in accordance with Art. 153(4) EPC

(43) Date of publication:
**18.06.2025 Bulletin 2025/25**

(21) Application number: **23853019.0**

(22) Date of filing: **10.08.2023**

(51) International Patent Classification (IPC):
*H04W 72/04* (2023.01)    *H04W 72/23* (2023.01)
*H04W 72/12* (2023.01)    *H04L 5/00* (2006.01)

(52) Cooperative Patent Classification (CPC):
**H04L 5/00; H04W 72/04; H04W 72/12; H04W 72/23**

(86) International application number:
**PCT/KR2023/011822**

(87) International publication number:
**WO 2024/035150 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.08.2022 KR 20220100947**
**11.08.2022 KR 20220100953**

(71) Applicant: **LG Electronics Inc.**
**Yeongdeungpo-gu**
**Seoul 07336 (KR)**

(72) Inventors:
• **CHOI, Seunghwan**
  **Seoul 06772 (KR)**
• **YANG, Suckchel**
  **Seoul 06772 (KR)**
• **LEE, Youngdae**
  **Seoul 06772 (KR)**
• **KIM, Seonwook**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING/RECEIVING SIGNALS IN WIRELESS COMMUNICATION SYSTEM**

(57)    A method and a device for transmitting/receiving signals in a wireless communication system, disclosed in the present specification, allow uplink switching to be performed between three or more bands. The uplink switching can be performed between set specific bands from among the three or more bands.

【FIG. 5】

```
Configure three or more UL bands          —S501

Configure one or more specific bands      —S503

UL transmit based on UL switching
related to specific band                  —S505
```

EP 4 572 469 A1

Description

## TECHNICAL FIELD

The present disclosure relates to a method and apparatus for use in a wireless communication system.

## BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

## DISCLOSURE

### Technical Problem

The object of the present disclosure is to provide a signal transmission and reception method for efficiently transmitting and receiving signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for transmitting and receiving a signal in a wireless communication system.

According to an aspect of the present disclosure, a method of transmitting and receiving a signal by a user equipment (UE) in a wireless communication system includes configuring at least three uplink (UL) bands, configuring at least one specific band from among the at least three UL bands, and performing UL transmission based on UL switching related to the at least one specific band, wherein the UL transmission is performed based on a first periodic resource configured in the at least one specific band, and based on the at least one specific band being configured, a second periodic resource configured in a band other than the at least one specific band is deactivated.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

## ADVANTAGEOUS EFFECTS

According to one embodiment of the present disclosure, when control and data signals are transmitted and received between communication devices, the signals may be transmitted and received more efficiently based on operations different from those in the prior art

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates a radio frame structure.

FIG. 2 illustrates a resource grid during the duration of a slot.

FIG. 3 illustrates a self-contained slot structure.

FIGS. 4 to 5 are diagrams illustrating methods for transmitting and receiving a signal according to the embodiments of the present disclosure.

FIGS. 6 to 9 illustrate devices according to an embodiment of the present disclosure.

## MODE FOR INVENTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

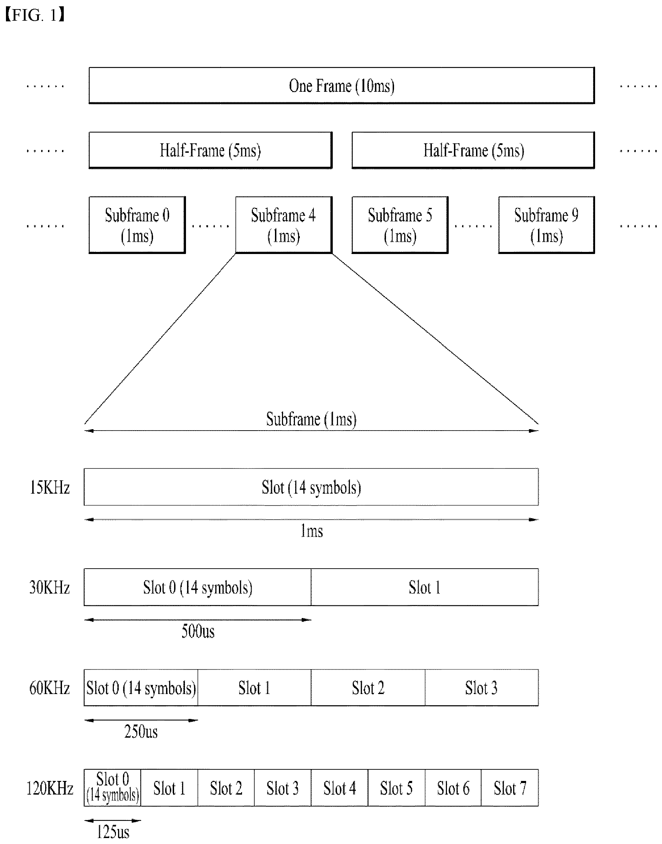

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS (15*2^u) | $N^{slot}_{symb}$ | $N^{frame,u}_{slot}$ | $M^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |

(continued)

| SCS (15*2^u) | $N^{slot}_{symb}$ | $N^{frame,u}_{slot}$ | $M^{subframe,u}_{slot}$ |
|---|---|---|---|
| 240KHz (u=4) | 14 | 160 | 16 |

* $N^{slot}_{symb}$: number of symbols in a slot
* $N^{frame,u}_{slot}$: number of slots in a frame
* $N^{subframe,u}_{slot}$: number of slots in a subframe

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

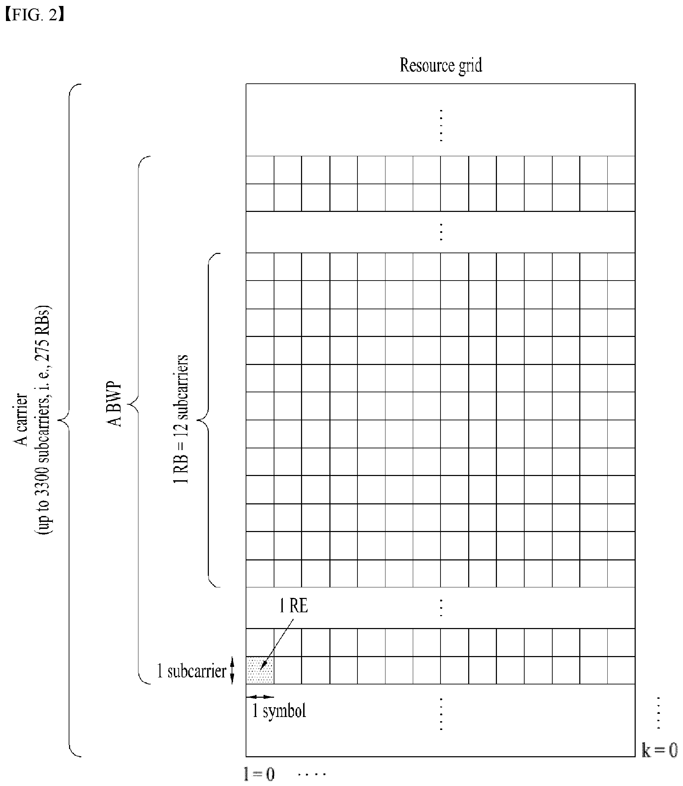

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

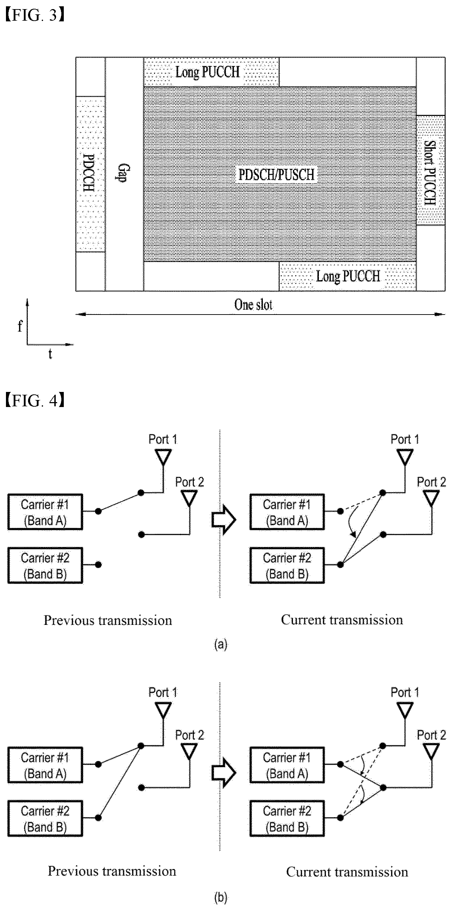

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

UL Physical Channels/Signals

(1) PUSCH

APUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 7 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

[Table 4]

| PUCCH format | Length in OFDM symbols $N_{symb}^{PUCCH}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |

(continued)

| PUCCH format | Length in OFDM symbols $N_{symb}^{PUCCH}$ | Number of bits | Usage | Etc |
|---|---|---|---|---|
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

(0) PUCCH Format 0 (PF0)

- Supportable UCI payload size: up to K bits (e.g., K = 2)
- Number of OFDM symbols included in one PUCCH: 1 to X symbols (e.g., X = 2)
- Transmission structure: only a UCI signal is configured with no DM-RS, and a UCI state is transmitted by selecting and transmitting one of a plurality of sequences.

(1) PUCCH Format 1 (PF1)

- Supportable UCI payload size: up to K bits (e.g., K = 2)
- Number of OFDM symbols included in one PUCCH: Y to Z symbols (e.g., Y = 4 and Z = 14)
- Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).

(2) PUCCH Format 2 (PF2)

- Supportable UCI payload size: more than K bits (e.g., K = 2)
- Number of OFDM symbols included in one PUCCH: 1 to X symbols(e.g., X = 2)
- Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.

(3) PUCCH Format 3 (PF3)

- Supportable UCI payload size: more than K bits (e.g., K = 2)
- Number of OFDM symbols included in one PUCCH: Y to Z symbols (e.g., Y = 4 and Z = 14)
- Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.

(4) PUCCH Format 4 (PF4 or F4)

- Supportable UCI payload size: more than K bits (e.g., K = 2)
- Number of OFDM symbols included in one PUCCH: Y to Z symbols (e.g., Y = 4 and Z = 14)

- Transmission structure: UCI and a DMRS are configured/mapped in/to different symbols based on TDM. The DFT is applied to encoded UCI bits with no multiplexing between UEs.

FIG. 4 illustrates an ACK/NACK transmission process. Referring to FIG. 4, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 or DCI format 1_1 may include the following information.

- Frequency domain resource assignment: Indicates an RB set assigned to a PDSCH.
- Time domain resource assignment: Indicates K0 and the starting position (e.g., OFDM symbol index) and length (e.g., the number of OFDM symbols) of the PDSCH in a slot.
- PDSCH-to-HARQ_feedback timing indicator: Indicates K1.

After receiving a PDSCH in slot #(n+K0) according to the scheduling information of slot #n, the UE may transmit UCI on a PUCCH in slot #(n+K1). The UCI includes an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

## Uplink switching with 3 or 4 uplink bands

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

Generally, due to a size of a UE, the number of antennas to be installed on the corresponding UE is limited. A UE with N transmission chains via N antennas may support up to N 1-port UL transmissions simultaneously or up to N-port UL transmissions. A method is required to support a UE with a limited transmission chain to perform UL transmission effectively. Hereinafter, implementations of this specification for UL transmission (Tx) switching are described. Most UEs developed to date support up to two Tx chains, and thus the implementations of this specification are described below assuming that the UE supports UL transmission through up to two Tx chains, i.e., up to two ports. However, implementations of this specification are not limited to 1-port or 2-port UL transmission, but may also be applied to N-port UL transmission, where N may be greater than 2.

FIG. 4 is a diagram illustrating a concept of UL transmission switching.

To increase the throughput and efficiency of UL transmission, NR Rel-16 provides UL Tx switching (UTS), which switches Tx chain(s) connected to UL carrier(s) under a certain condition, for the purpose of enabling a UE to effectively perform 1-port UL transmission or 2-port UL transmission by using up to two Tx chains. FIG. 4(a) illustrates 1Tx-2Tx switching between two carriers/bands, and FIG. 4(b) illustrates 2Tx-2Tx switching between two carriers/bands.

For example, if UL transmission (hereinafter, "previous transmission") is performed on carrier #1 with 1 Tx chain, and then UL transmission (hereinafter, "current transmission") is configured/instructed to be performed on another carrier #2 with 2 Tx chains, the UE may switch the Tx chain connected to carrier #1 to carrier #2 to enable 2-port UL transmission on carrier #2. These UTS configuration and switching method may be applied to band combinations corresponding to evolved-universal terrestrial radio access new-radio-dual connectivity (EN-DC) without supplementary UL (SUL), standalone SUL, and inter-band CA. In NR Rel-17, an additional condition is introduced to extend the 1Tx-2Tx switching (i.e., switching between 1 Tx chain and 2 Tx chain) of existing NR Rel-16 to 2Tx-2Tx switching (i.e., switching between 2 Tx chain and 2 Tx chain), and at the same time, UTS between two carriers introduced in NR Rel-16 is extended to allow UTS between two different bands (e.g., 1 carrier in one band and 2 contiguous carriers in another band).

When a certain condition is satisfied and the UE is configured with uplinkTxSwitching via RRC signaling, the UE may omit UL transmission during uplink switching gap NTx1-Tx2. For example, when certain conditions are satisfied and the UE is configured with uplinkTxSwitching via RRC signaling, the UE omits all UL transmission(s), including UL transmission scheduled via DCI and UL transmissions configured by higher layer signaling (e.g., configured grant-based PUSCH), during a UL switching gap $N_{Tx1-Tx2}$. The switching gap NTx1-Tx2 may be indicated by uplinkTxSwitchingPeriod2T2T provided from the UE to the BS via UE capability report when uplinkTxSwitching-2T-Mode is configured via RRC signaling, otherwise the switching gap NTx1-Tx2 may be indicated by uplinkTxSwitchingPeriod provided from the UE to the BS via UE capability report. Here, the RRC configuration uplinkTxSwitching may be provided to the UE as included in a configuration regarding a serving cell, and may include uplinkTxSwitchingPeriodLocation indicating whether a location of a UL Tx switching period is configured on the UL carrier in case of inter-band UL CA, SUL or (NG)EN-DC, and uplinkTxSwitchingCarrier indicating that the configured carrier is carrier 1 or carrier 2 for dynamic UL Tx switching. The RRC parameter uplinkTxSwitching-2T-Mode indicates that a 2Tx-2Tx switching mode is configured for inter-band UL CA or SUL, in which case a switching gap duration for triggered UL switching may be equal to a switching time capability value reported for the switching mode. When the RRC parameter uplinkTxSwitching-2T-Mode is not provided and uplinkTxSwitching is configured, it may be interpreted that 1Tx-2Tx UTS is configured, in which case there may be one UL (or one UL band in case of intra-band) configured with uplinkTxSwitching.

When the UE indicates the capability for UL switching for a band combination and configures the band combination to MCG using E-UTRA radio access and SCG using NR radio access, to UL CA, or to a serving cell with two UL carriers with higher layer (e.g. RRC) parameter supplementaryUplink, the switching gap may be present under certain conditions. For example, the following tables are taken from 3GPP TS 38.214 V17.1.0 and illustrate UTS conditions.

When UL switching is triggered for UL transmission starting at $T_0$, which is after $T_0 - T_{offset}$, the UE is not expected to cancel the UL switching, or to trigger any other new UL switching that occurs before $T_0$ for any other UL transmission scheduled after $T_0 - T_{offset}$, where $T_{offset}$ may be a UE processing procedure time defined for UL transmission triggering switching (e.g. see S5.3, S5.4, S6.2.1 and S6.4 of 3GPP TS 38.214 and S9 of 3GPP TS 38.213). The UE is not expected to perform more than one UL switching in a slot with $u_{UL} = \max(u_{UL,1}, u_{UL,2})$, where $u_{UL,1}$ corresponds to a subcarrier spacing of an active UL BWP of one UL carrier before the switching gap and $u_{UL,2}$ corresponds to the subcarrier spacing of the active UL BWP of another UL carrier after the switching gap.

[Table 5]

| |
|---|
| **6.1.6.1 Uplink switching for EN-DC** |
| For a UE indicating a capability for uplink switching with *BaundCombinasion-UplinkTxSwitch* for a band combination, and if it is for that band combination configured with a MCG using E-UTRA radio access and with a SCG using NR radio access (EN-DC), if the UE is configured with uplink switching with parameter *uplink TxSwitching,* |
|     - for the UE configured with *switchedUL* by the parameter *uplinkTxSwitchingOption,* when the UE is to transmit in the uplink based on DCI(s) received before $T_0 - T_{offset}$ or based on a higher layer configuration(s): |
|         - when the UE is to transmit an NR uplink that takes place after an E-UTRA uplink on another uplink carrier then the UE is not expected to transmit for the duration of $N_{Tx1-Tx2}$ on any of the two carriers. |
|         - when the UE is to transmit an E-UTRA uplink that takes place after an NR uplink on another uplink carrier then the UE is not expected to transmit for the duration of $N_{Tx1-Tx2}$ on any of the two carriers. |
|         - the UE is not expected to transmit simultaneously on the NR uplink and the E-UTRA uplink. If the UE is scheduled or configured to transmit any NR uplink transmission overlapping with an E-UTRA uplink transmission, the NR uplink transmission is dropped, |
|     - for the UE configured with *uplinkTxSwitchingOption* set to 'dualUL', when the UE is to transmit in the uplink based on DCI(s) received before $T_0 - T_{offset}$ or based on a higher layer configuration(s): |
|         - when the UE is to transmit an NR two-port uplink that takes place after an E-UTRA uplink on another uplink carrier then the UE is not expected to transmit for the duration of $N_{Tx1-Tx2}$ on any of the two carriers. |
|         - when the UE is to transmit an E-UTRA uplink that takes place after an NR two-port uplink on another uplink carrier then the UE is not expected to transmit for the duration of $N_{Tx1-Tx2}$ on any of the two carriers. |
|         - the UE is not expected to transmit simultaneously a two- port transmission on the NR uplink and the E-UTRA uplink. |
|     - in all other cases the UE is expected to transmit normally all uplink transmissions without interruptions. |
|     - when the UE is configured with *tdm-PatternConfig* or by *tdm-PatternConfig2* |
|         - for the E-UTRA subframes designated as uplink by the configuration, the UE assumes the operation state in which one-port E-UTRA uplink can be transmitted. |
|         - for the E-UTRA subframes other than the ones designated as uplink by the configuration, the UE assumes the operation state in which two-port NR uplink can be transmitted. |

[Table 6]

### 6.1.6.2 Uplink switching for carrier aggregation

For a UE indicating a capability for uplink switching with *BandCombination-UplinkTxSwitch* or *uplinkTxSwitchingPeriod2T2T* for a band combination, and if it is for that band combination configured uplink carrier aggregation:

- If the UE is configured with uplink switching with parameter *uplinkTxSwitching*, when the UE is transmit in the uplink based on DCI(s) received before $T_0 - T_{offset}$ or based on a higher layer configuration(s):

  - When the UE is to transmit a 2-port transmission on one uplink carrier on one band and if the preceding uplink transmission is a 1-port transmission on another uplink carrier on another bar the UE is not expected to transmit for the duration of $N_{Tx1-Tx2}$ on any of the carriers.

  - When the UE is to transmit a 1-port transmission on one uplink carrier on one band and if the preceding uplink transmission is a 2-port transmission on another uplink carrier on another bar the UE is not expected to transmit for the duration of $N_{Tx1-Tx2}$ on any of the carriers.

  - For the UE configured with *uplinkTxSwitchingOption* set to 'switchedUL', when the UE is to t a 1-port transmission on one uplink carrier on one band and if the preceding uplink transmissi a 1-port transmission on another uplink carrier on another band, then the UE is not expected to transmit for the duration of $N_{Tx1-Tx2}$ on any of the carriers.

  - For the UE configured with *uplinkTxSwitchingOption* set to 'dualUL', when the UE is to transr port transmission on one uplink carrier on one band and if the preceding uplink transmission w port transmission on a carrier on the same band and the UE is under the operation state in whid port transmission cannot be supported in the same band, then the UE is not expected to transm the duration of $N_{Tx1-Tx2}$ on any of the carriers.

  - For the UE configured with *uplinkTxSwitchingOption* set to 'dualUL', when the UE is to transr port transmission on one uplink carrier on one band and if the preceding uplink transmission w port transmission on another uplink carrier on another band and the UE is under the operation which 2-port transmission can be supported on the same uplink carrier, then the UE is not expe transmit for the duration of $N_{Tx1-Tx2}$ on any of the carriers.

  - For the UE configured with *uplinkTxSwitchingOption* set to 'dualUL', if the UE is configured *OneT* with *uplinkTxSwitching-DualUL-TxState*, when the UE is under the operation state in w port transmission can be supported on one carrier on one band followed by no transmission on carrier on the same band and 1-port transmission on the other carrier on another band the UE s consider this as if 1-port transmission was transmitted on both uplinks, otherwise the UE shall consider this as if 2-port transmission took place on the transmitting carrier.

  - If *uplinkTxSwitching-2T-Mode* is configured, when the UE is to transmit a 2-port transmission uplink carrier on one band and if the preceding uplink transmission is a 2-port transmission on another uplink carrier on another band, then the UE is not expected to transmit for the duration $N_{Tx1-Tx2}$ on any of the carriers.

  - The UE is not expected to be scheduled or configured with uplink transmissions that result in simultaneous transmission on two antenna ports on one uplink carrier on one band, and any transmission on another uplink carrier on another band.

- In all other cases the UE is expected to transmit normally all uplink transmissions without interru

[Table 7]

6.1.6.3 Uplink switching for supplementary uplink

For a UE indicating a capability for uplink switching with *BandCombination-UplinkTxSwitch* for a band combination, and if it is for that band combination configured in a serving cell with two uplink carriers with higher layer parameter *supplementaryUplink:*

- If the UE is configured with uplink switching with parameter *uplinkTxSwitching,*

(continued)

| |
|---|
| 6.1.6.3 Uplink switching for supplementary uplink |
|     - If the UE is to transmit any uplink channel or signal on a different uplink on a different band from the preceding transmission occasion based on DCI(s) received before $T_0 - T_{offset}$ or based on a higher layer configuration(s), then the UE assumes that an uplink switching is triggered in a duration of switching gap $N_{Tx1-Tx2}$, where $T_0$ is the start time of the first symbol of the transmission occasion of the uplink channel or signal and $T_{offset}$ is the preparation procedure time of the transmission occasion of the uplink channel or signal given in clause 5.3, clause 5.4, clause 6.2.1, clause 6.4 and in clause 9 of [6, TS 38.213], respectively. During the switching gap $N_{Tx1-Tx2}$, the UE is not expected to transmit on any of the two uplinks, |
|   - In all other cases the UE is expected to transmit normally all uplink transmissions without interruptions. |

NR supports a wide spectrum across various frequency ranges. The availability of a spectrum is expected to increase in a 5G advanced market due to repurposing of bands originally used in previous generation cellular networks. Especially for a low-frequency FR1 band, an available spectral block tends to be more fragmented and distributed over narrower bandwidths. For an FR2 band and some FR1 bands, a multicarrier operation within a band is required as an available spectrum is to be widened. To satisfy diverse spectrum requirements, it is important to provide higher throughput and adequate coverage in a network by using these distributed spectrum band or wider bandwidth spectrum in a more spectrum/power efficient and flexible manner. For a multicarrier UL operation, the current specification has several limitations. For example, a 2TX UE may be configured with up to two UL bands to be changed only by RRC reconfiguration, and UL Tx switching may only be performed between the two UL bands for the 2Tx UE. Instead of RRC-based cell(s) reconfiguration, dynamically selecting carriers with UL Tx switching based on, for example, data traffic, TDD DL/UL configuration, bandwidth and channel conditions of each band may potentially lead to a higher UL data rate, spectrum utilization, and UE capacity.

For a higher UL data rate, spectrum utilization, and UE capacity, UTS between more than two bands is currently considered. Hereinafter, UTS trigger condition(s), UTS-related configuration method(s), and/or UTS operation method(s) required to support UTS between multiple bands (e.g., three or more bands) according to some implementations of this specification are described.

Hereinafter, a cell may be interpreted according to context. For example, the cell may mean a serving cell. The cell may include one DL component carrier (CC) and 0 to 2 UL CCs, but implementations of this specification described below are not limited thereto. In the following, unless otherwise specified, the terms cell and CC may be used interchangeably. In some implementations of this specification, the cell/CC may be replaced with an (active) BWP within the serving cell. Unless otherwise specified, in the implementations of this specification described below, the cell/CC may be used as a concept encompassing PCell, SCell, PsCell, and the like, which may be configured/expressed in a carrier aggregation (CA)/dual connectivity (DC) scenario.

Hereinafter, the term "band" means a frequency band, and the term "band" may be used interchangeably with the terms "carrier" and/or "cell" within the band. In this case, each band may include one carrier or multiple (e.g., two) contiguous (or non-contiguous) carriers. The proposed methods described below may be applied to inter-band UL CA, intra-band UL CA, NR-DC, EN-DC, (standalone) SUL scenarios and related band combinations (unless otherwise specified).

For convenience of explanation in the implementations of this specification described below, the following notation is used.

- When UTS occurs, it may be expressed as a UTS trigger.
- Band (or carrier) related to UTS: This may refer to a band/carrier before and after UTS occurs.
- A Tx chain transition time caused by UTS is denoted as a UTS gap (or UTS period). During the UTS gap, no UL transmission occurs in the band/carrier related to the UTS.
- A 1 Tx chain may be expressed as 1T, and a 2Tx chain may be expressed as 2T.
- 1-port UL transmission may be expressed as 1p, and 2-port UL transmission may be expressed as 2p.
- When 1 Tx chain or 2 Tx chains are connected to a certain band A (and/or carrier(s) belonging to the band A), these states may be expressed as A(1T) and A(2T), respectively.
- When 1 Tx chain is connected to each of two specific bands A (and/or carrier(s) belonging to band A) and band B (and/or carrier(s) belonging to band A), this state may be expressed as A(1T)+B(1T).
- UL transmission may mean any UL channel or UL signal supported by NR, and the like.
- "Previous transmission" may mean the most recent UL transmission performed by the UE prior to UTS triggering, and "current transmission" may mean UL transmission performed by the UE immediately (or simultaneously) with UTS triggering. The term "transmission" hereinafter may mean "UL transmission".

- The expression that UL transmission occurs may mean UL transmission scheduled via DCI for a UL grant and/or UL transmission configured via higher layer signaling (e.g., RRC signaling) (e.g., configured grant UL transmission).
- When 1-port UL transmission occurs in a specific band A (and/or carrier(s) belonging to band A), it may be expressed as A(1p), and when 2-port UL transmission occurs, it may be expressed as A(2p).
- When 1-port UL transmission occurs in two specific bands, e.g., band A and band B, (and/or carrier(s) belonging to the corresponding band), it may be expressed as A(1p)+B(1p).

Some implementations of this specification described below are described in terms of UTS generation between two bands in a situation in which four bands/carriers are configured (or activated). However, the same method(s) as the implementations of this specification described below may also be applied to UTS that occurs in a situation in which a smaller number of bands (e.g., 3) are configured/activated. The same method(s) as the implementations of this specification described below may also be applied to UTS that occurs in a situation in which a larger number of bands (e.g., 5) are configured/activated.

Some implementations of this specification described below are described without distinguishing between 1Tx-2Tx switching or 2Tx-2Tx switching. However, some implementations may be specifically applicable to 1Tx-2Tx switching and/or 2Tx-2Tx switching.

In some implementations of this specification described below, the "simultaneous transmission" in multiple bands may mean that a start time (e.g., start symbol) of UL transmissions in each of the corresponding multiple bands coincide and/or some (or all) of the UL transmission resources/periods in each of the multiple bands overlap in time.

The proposed method described below relates to a method for configuring/instructing a specific number of bands in which UL Tx switching is capable of operating for a UE having multiple (e.g., three or more) bands configured. For convenience of explanation in the proposed method described below, the following expressions may be used.

- For example, from among multiple UL bands configured in a UE, a specific one band may be configured/instructed as an active band for UTS, and a Tx chain due to UTS may be configured to always include the corresponding one active band. When a specific one active band is configured/instructed and UTS may only occur on two band pairs including the corresponding one active band, such (configured/instructed) one UL band is referred to as A-band (anchor band). In this case, when a switch-to band (in which a Tx chain changes from a disconnected state to a connected state through a specific UTS) is an A-band, the corresponding switch-from band (in which the Tx chain changes from a connected state to a disconnected state through the corresponding UTS) is expressed as N-band (or non-anchor band). Alternatively, when the switch-from band is an A-band, the corresponding switch-to band is expressed as an N-band.

As another example, from among multiple UL bands configured in a UE, specific Z (e.g., Z=2) bands may be configured/instructed as active bands for UTS, and the Tx chain due to UTS may always be switched only from among the corresponding Z-bands. That is, UL Tx switching may only operate in a band pair including the corresponding Z-bands. In other words, UTS triggering due to UL data/control channels/signals scheduled (via DCI) or configured (via a configuration such as RRC) may only occur on the corresponding Z-bands. These Z active band pairs are represented as Z-band pairs, and each band constituting the Z-band pairs is represented as a Z-band.

In the proposed method described below, the configuration/instruction method for {A-band, and N-band} may be applied interchangeably with the configuration/instruction method for the Z-band pair where Z=2. The configuration/instruction method for A-band or N-band and the configuration/instruction method for Z-band (even if Z>1) may be applied interchangeably (extended).

## [1] A-band configuration/instruction method for UL Tx switching

[1-1] A base station (BS) may explicitly configure/instruct a specific one band from among multiple (e.g., 3 or 4 or more) UL bands configured in a UE as an A-band. The UE may expect that UTS may always occur including the corresponding A-band. A separate DCI or MAC-CE may be used to configure/instruct the corresponding A-band. When the A-band is configured, the two Tx chains of the UE may be switched together to the corresponding A-band. Therefore, when the A-band is configured/instructed, an initial state of the Tx chain may be a state in which there are 2 Tx in the A-band. When the A-band is configured to two specific bands, the initial state of the Tx chain may be a state in which there is 1 Tx chain for each of the corresponding two bands. The initial state of the A-band may be equally applied when configuring/instructing the A-band (or N-band or Z-band) by other methods described below.

[1-2] A BS may implicitly configure/instruct a specific one (or two) band from among multiple (e.g., 3 or 4 or more) UL bands configured in a UE as an A-band. That is, the A-band may be determined without configuration/instruction via a separate DCI (or MAC-CE). One of the following methods may be used.

- Method 1: When a UE is scheduled for 2-port UL transmission in a specific band (or cell) through DCI, the corresponding band may be (implicitly) configured to the A-band.

In this case, if a specific one band is configured as the A-band (2-port UL transmission is scheduled), when the UE is scheduled to perform 1-port UL transmission in each of the two bands, the UE may consider the corresponding scheduling as valid only for a band pair including the A-band. Accordingly, if 1-port UL transmission is scheduled in each of the two bands included in the band pair that does not include the A-band, the UE may consider the scheduling as invalid or may not expect such scheduling to occur. When a certain band is configured/indicated as A-band (for which 2-port UL transmission is scheduled), the corresponding band may remain as A-band until another band is configured/instructed as A-band (in the same manner in which the configuration/instruction method in the corresponding A-band). For example, even if 1-port UL transmission is scheduled in each of two bands including the A-band (or 1p UL transmission is scheduled in a band other than the A-band), the A-band may still remain the band that is most recently configured/instructed as the A-band through scheduling of 2-port UL transmission.

- Method 2: When a UE is scheduled with 1-port UL transmission in each of two specific bands (or cells) through DCI, the corresponding two bands may be (implicitly) configured as an A-band pair.

In this case, when two specific bands are configured as an A-band pair (each with 1-port UL transmission scheduled), if a UE is scheduled for 1-port or 2-port UL transmission for only one band, it may be considered that scheduling is valid only for the A-band belonging to the A-band pair. Scheduling for a band that does not belong to the A-band pair may be considered invalid, or scheduling other than scheduling for the A-band that belongs to the A-band pair may not be expected to occur. If two specific bands A and B are configured as the A-band pair (each with 1-port UL transmission scheduled), and then another two specific bands C and D are scheduled with 1-port UL transmission each, the corresponding bands C and D may be reconfigured as a new A-band pair.

Method 3: When a specific type of configured UL transmission (which may be configured via RRC) is configured or activated in a specific band in a UE, the corresponding band may be (implicitly) configured in the A-band.

[1-3] When the A-band is configured through method 1/2/3 of [1-2] described above, UTS triggering may be regulated/limited to occur including the corresponding A-band. That is, either the switch-from band or the switch-to band of UTS needs to be the A-band. Here, the term switch-from band or switch-to band means that, for example, when a Tx chain in band X is switched to band Y, the band before switching, band X, is defined as the switch-from band, and the band after switching, band Y, is defined as the switch-to band. When the A-band is configured/instructed, the UL scheduling of the UE may be restricted such that both Tx chains do not switch to any band other than the A-band (simultaneously).

## [2] Method of changing A-band for UL Tx switching and configuring/instructing default band

[2-1] The method for changing the A-band may be determined as one (or a combination of two or more) of the methods described in [1-1] and/or [1-2]. The current A-band may be maintained until another band is configured/instructed (in the same manner as the current A-band is configured/instructed).

[2-2] Default (or fallback) band(s) may be configured for the A-band. In this case, the default band(s) may be predefined, configured via RRC signaling, configured to a band/carrier with the lowest index from among the UL bands/carriers configured in the UE (or the UL band/carrier corresponding to the lowest frequency), or configured to a band corresponding to/included in a specific cell (e.g., PCell).

[2-3] If default (or fallback) band(s) for the A-band is configured, a separate timer (or counter) is configured for fallback to the A-band. When the A-band is configured/instructed as a non-default band, the timer is (re)set and when the timer expires, the A-band may fall back to the default band. The corresponding timer may be (re)set to a specific configurable value and then decremented by 1 every (for example) slot. The corresponding timer may be (re)set when scheduled/configured UL transmission occurs in the A-band. The corresponding timer may be configured per band or per band combination (via RRC).

[2-4] When default (or fallback) band(s) is configured for the A-band, if a band other than the default band is configured as the A-band, the corresponding band may be maintained as the A-band only for a specific time (e.g., 1 slot or 1 frame) (predefined or configurable via RRC), and then the A-band may fall back to the default band. In this case, even if additional UL transmissions occur while the non-default band is the A-band, the additional UL transmissions may fall back to the default band after the specific time.

[2-5] If UL transmission is scheduled in a band other than the A-band and/or the N-band, the UE may disregard the UL transmission (deeming the scheduling as invalid scheduling). Alternatively, if invalid scheduling is detected once or more than a threshold (in case a default (or fallback) band(s) for the A-band is configured), the A-band may be changed to the fallback band(s). A BS and a UE may equally determine the threshold X and/or fallback condition. Alternatively, if (invalid) scheduling to a certain band (e.g., band K) is repeated Y times, the A-band (or N-band) may be changed to the corresponding band K.

[2-6] When the A-band (or N-band) configuration/instruction is performed through scheduling DCI (i.e., UL grant), if a DCI field size related to resource allocation of the switch-from band/cell is not suitable for resource allocation of the switch-to band/cell (e.g., if the RA field size of the switch-to band is smaller (or larger) than the RA field size of the switch-from band), a portion of the RA field of the switch-from band/cell may be discarded or the LSB/MSB may be filled with '0' to match the RA field size of the switch-to band/cell.

**[3] N-band configuration/instruction method for UL Tx switching**

[3-1] The N-band may be configured/instructed similarly to the [1-1] method (independently of the A-band). The BS may explicitly configure/instruct a specific one band from among multiple UL bands configured in the UE as the A-band. A separate DCI or MAC-CE may be used to instruct the corresponding N-band. The initial Tx chain state of the corresponding band when the N-band is configured may be defined/configured.

[3-2] The N-band may be configured/instructed similarly to the [1-2] method (independently of the A-band). The BS may implicitly configure/instruct a specific one band from among multiple UL bands configured in the UE as the N-band. That is, the N-band may be determined without configuration/instruction via a separate DCI (or MAC-CE). One of the following methods may be used.

- Method 1: When a UE is scheduled for 2-port UL transmission in a specific band (or cell) through DCI, the corresponding band may be (implicitly) configured to the N-band.
- Method 2: When a UE is scheduled with 1-port UL transmission in each of two specific bands (or cells) through DCI, the corresponding two bands may be (implicitly) configured as a pair of {A-band, and N-band}. In this case, from among the two bands, the band/carrier with the lowest index (or the UL band/carrier corresponding to the lowest frequency) or the band corresponding to/included in a specific cell (e.g., PCell) may be configured as the A-band, and the other band may be configured as the N-band.

Method 3: When a specific type of configured UL transmission (which may be configured via RRC) is configured or activated in a UE, the corresponding band may be (implicitly) configured to the N-b{A-band, and N-band}.

[3-3] The N-band may be configured/instructed jointly with the A-band. Alternatively, the N-band may be determined dependently on the A-band. One of the following methods may be used.

- Method 1: {A-band, N-band} combination may be configured/instructed via DCI or MAC-CE.
- Method 2: {A-band, and N-band} combination is configured via RRC. Once the A-band is determined (via the proposed methods [1] and [2] described above), the N-band may be automatically determined.
- Method 3: The N-band may be (implicitly) configured to one of the remaining bands excluding the A-band from among the bands configured to the UE (e.g., it may be a band corresponding to the lowest (or highest) index from among the bands excluding the A-band, or it may be a band closest to the A-band).
- Method 4: N-band(s) may be configured as a set of bands remaining from among the bands configured in the UE, excluding band A (or an N-band pool may be configured). In this case, Tx switching between bands belonging to the N-band pool is not allowed, but Tx switching between the A-band and any band (belonging to the N-band pool) may be possible.

[3-4] When the {A-band, and N-band} combination is configured/instructed by the methods of [3-2] and/or [3-3] described above, the configurable band pairs may be limited depending on the capability of the UE for simultaneous UL transmission in the A-band and the N-band. In this case, the N-band may be configured/instructed as one of the "bands that allow simultaneous UL transmission with the A-band". Alternatively, the N-band may be configured/instructed as one of the "bands having the same UTS gap as the A-band". Alternatively, the N-band (or A-band) may be configured/instructed to be one of the bands in which e 2 Tx chains (or 2 intra-band carriers) may be configured.

**[4] Z-band configuration/instruction method for UL Tx switching**

The method described below is described assuming Z=2. However, the same principle may be applied even when Z>2.

[4-1] The BS may explicitly configure/instruct specific two bands from among multiple UL bands configured in the UE as the Z-band. The UE may expect that UTS may always occur only between the corresponding Z-bands that are always configured. A separate DCI or MAC-CE may be used to instruct the corresponding Z-bands. When the Z-band is configured, the two Tx chains of the UE may be switched together to the corresponding Z-band. That is, when the Z-band is configured/instructed, the initial state of the Tx chain may be a state in which there are 2 Tx chains in one of the bands corresponding to the Z-band. Alternatively, (when Z=2) the initial state of the Tx chain may be one Tx chain for each of the two bands.

[4-2] The BS may implicitly configure/instruct specific two bands from among multiple UL bands configured in the UE as the Z-band. That is, the Z-band may be determined without configuration/instruction via a separate DCI (or MAC-CE). One of the following methods may be used.

- Method 1: When a UE is scheduled for 2-port UL transmission in a specific band (or cell) through DCI, the corresponding band and a band closest thereto (or a specific band determined according to a rule configured via RRC or predefined) may be (implicitly) configured to the Z-band.
- Method 2: When a UE is scheduled with 1-port UL transmission in each of two specific bands (or cells) through DCI, the corresponding two bands may be (implicitly) configured as a Z-band pair.
- Method 3: When a specific type of configured UL transmission (which may be configured via RRC) is configured or activated in the UE, the corresponding band and/or a band closest thereto (or a specific band configured via RRC or determined according to a predefined rule) may be (implicitly) configured to the Z-band.

When the Z-band is configured through method 1/2/3 of [3-2] described above, UTS triggering may only occur between the corresponding two bands. (i.e., the switch-from band and switch-to band of UTS are the corresponding two bands). When the Z-band is configured/instructed, the UL scheduling of the UE may be restricted such that both Tx chains do not switch to any band other than the Z-band. For example, if two specific bands are configured to the Z-band, the UE may not expect UL transmission to be scheduled in any other band (configured to the UE) other than the two bands, and if scheduling occurs, the UL transmission may be dropped. When a specific band is configured/instructed as a Z-band (in the same manner as it is configured/instructed as a Z-band), the corresponding band may remain as a Z-band until another band is configured/instructed as a Z-band.

[4-4] The method for changing the Z-band may be determined as one (or a combination of two or more) of the methods described in [4-1] to [4-3]. The current Z-band may be maintained until another band is configured/instructed (in the same manner as the current Z-band is configured/instructed).

[4-5] Default (or fallback) band(s) may be configured for the Z-band. In this case, the default band(s) may be predefined, configured via RRC signaling, configured to Z-bands/carriers (or UL band/carrier corresponding to the lowest frequency) in descending order of indices from among UL bands/carriers configured in a UE, or configured to a predefined band pair corresponding to/included in a specific cell (e.g., PCell).

[4-6] If default (or fallback) band(s) for the Z-band is configured, a separate timer (or counter) is configured for fallback to the Z-band. When the Z-band is configured/instructed as a non-default band, the timer is (re)set and when the timer expires, the Z-band may fall back to the default band. The corresponding timer may be (re)set to a specific configurable value and then decremented by 1 every (for example) slot. The corresponding timer may be (re)set when scheduled/configured UL transmission occurs in the Z-band. The corresponding timer may be configured per band or per band combination (via RRC).

[4-7] When default (or fallback) band(s) is configured for the Z-band, if a band pair other than the default band is configured as the Z-band, the corresponding band may be maintained as the Z-band only for a specific time (e.g., 1 slot or 1 frame) (predefined or configurable via RRC), and then the Z-band may fall back to the default band. In this case, even if additional UL transmissions occur while the non-default band is the Z-band, the additional UL transmissions may fall back to the default band after the specific time.

[4-8] If UL transmission is scheduled in a band other than the Z-band, the UE may disregard the UL transmission (deeming the scheduling as invalid scheduling). Alternatively, if invalid scheduling is detected once or more than a threshold (in case a default (or fallback) band(s) for the Z-band is configured), the Z-band may be changed to the fallback band(s). ABS and a UE may be changed to fallback band(s). The BS and the UE may equally determine the threshold X and/or fallback condition. Alternatively, if (invalid) scheduling to a certain band (e.g., band K) is repeated Y times, the Z-band may be changed to the corresponding band K.

[4-9] When the Z-band configuration/instruction is performed through scheduling DCI (i.e., UL grant), if a DCI field size related to resource allocation of the switch-from band/cell is not suitable for resource allocation of the switch-to band/cell (e.g., if the RA field size of the switch-to band is smaller (or larger) than the RA field size of the switch-from band), a portion of the RA field of the switch-from band/cell may be discarded or the LSB/MSB may be filled with '0' to match the RA field size of the switch-to band/cell.

[5] Configured grant (CG) PUSCH and/or periodic SRS configuration method

When a specific band (or band pair) is configured/instructed for UTS (during a time when a corresponding specific band (or band pair) configuration/indication is maintained), transmission is possible only in a configured grant (CG) PUSCH configured in the specific band(s) (e.g., A-band or N-band or Z-band), and the CG PUSCH configured in other bands may be deactivated (released or suspended) (during a time when the specific band (or band pair) configuration/indication is maintained). Alternatively, the UE may disregard (or drop) the CG PUSCH configured in a band other than the corresponding specific band (or band pair) (during a time when the specific band (or band pair) configuration/instruction is maintained). For example, when the A-band and/or N-band are configured for UTS, only the CG PUSCH configured in the corresponding A-band and/or N-band is treated as valid, and the CG PUSCH configured in other bands is treated as invalid. Alternatively, when the Z-band (e.g., specific two bands) is configured for UTS, only the CG PUSCH configured in the corresponding Z-band is treated as valid, and the CG PUSCH configured in other bands is treated as invalid. The operating method is not limited to the CG PUSCH, and the same operation may be applied to any UL channel/signaling resource that is configured semi-statically or activated semi-persistently.

[5-2] When a specific band (or band pair) is configured/instructed for UTS, only a periodic SRS (P-SRS) configured for the corresponding band(s) (e.g., A-band or N-band or Z-band) may be transmitted during a time when configuration/instruction for the corresponding specific band (or band pair) is maintained. A P-SRS configured in a different band may be deactivated (e.g., released or suspended) for a time when configuration/instruction for the corresponding specific band (or band pair) is maintained. Alternatively, the UE may disregard (or drop) the P-SRS configured in a band other than the corresponding specific band (or band pair) during a time when the specific band (or band pair) configuration/instruction is maintained. For example, when the A-band and/or N-band are configured for UTS, only the P-SRS configured in the corresponding A-band and/or N-band is treated as valid, and the P-SRS configured in other bands is treated as invalid. Alternatively, when the Z-band (e.g., specific two bands) is configured for UTS, only the P-SRS configured in the corresponding Z-band is treated as valid, and the P-SRS configured in other bands is treated as invalid. The operating method is not limited to the P-SRS, and the same operation may be applied to any UL channel/signaling resource that is configured semi-statically or activated semi-persistently.

[5-3] After CG PUSCH (or P-SRS) resources are configured in each band configured in the UE (or for each activated band configured in the UE), if a specific band (e.g., A-band, N-band, or Z-band) for UTS is instructed/configured, the CG resource of the corresponding band are activated, and CG PUSCH (or P-SRS) resources configured in other bands may be deactivated. (Deactivation may be suspended for Type 1 CG and released for Type 2 CG depending on a CG type). Alternatively, when {A-band, and N-band} is configured, only a configured/periodic UL transmission resource in one of the bands (e.g., A-band) may be activated, and a configured/periodic UL transmission resource on the other band (e.g., N-band) may be deactivated. Alternatively, if the Z-band is configured with two bands, only the configured/periodic UL transmission resource on one of the bands (e.g., the lowest index band) may be activated, and the configured/periodic UL transmission resource on the other band (e.g., the highest index band) may be deactivated.

[5-4] If a band pair (e.g., A-band, N-band, or Z-band) configured for UTS is changed (and/or UTS occurs due to it), the same resource as a CG resource that is configured (in the A-band (or N-band or Z-band)) before a change may be configured in the A-band (or N-band or Z-band) after the change. For example, when the A-band is changed from band#1 to band#2, the same resource as a CG PUSCH (or P-SRS) resource configured in band#1 may be configured in band#2. The same CG PUSCH (or P-SRS) resource may mean a resource in which the configured band is different but all RRC parameters for configuring the resource are the same. In this case, if there is a preset CG PUSCH (or P-SRS) resource in band#2 (a band after change), the same CG resource as band#1 is not configured, and the preset CG resource in band#2 may be used. Alternatively, the CG resource configured in band#2 may be overwritten by a new CG resource (configured identically to the CG resource in band#1).

{5-5} For the [5-1] to [5-4] described above, activation of the CG resource may be activated together/simultaneously (without separate signaling) as a band configured/instructed for UTS (e.g., A-band, N-band, or Z-band) is configured (or changed). Alternatively, activation of the CG resource may be separately indicated (after configuration/change of the corresponding band) via a separate DCI (or MAC-CE).

[5-6] For the [5-1] to [5-4] described above, deactivation of the CG resource may be deactivated (without separate signaling) together/simultaneously with release (or change) of a band (e.g., A-band, N-band, or Z-band) configured/instructed for UTS, or deactivation of CG resources may be separately indicated (after the configuration/change of the corresponding band) via separate DCI (or MAC-CE).

[5-7] In the [5-6] described above, deactivation of the CG resource may be suspended or released depending on the CG type. When a specific condition for suspension/release is configured, the CG resource may be suspended/released when the corresponding condition is satisfied. In this case, the specific condition may be, for example, if empty transmission occurs cumulatively (or continuously) N (=threshold) times in the corresponding CG resource, the corresponding CG may be suspended/released. Alternatively, as another example, a counter/timer for suspension/release may be configured, and the counter/timer may be (re)configured at a time of allocation of the corresponding CG resource, or at a time of activation of the corresponding band, or at a time of transmission of the corresponding CG, and the CG resource may be suspended/released when the timer expires.

[5-8] An operation may be configured to (exceptionally) perform Tx switching for a CG PUSCH (and/or P-SRS) resource of all/specific bands configured for the UE without changing the band configured/instructed for UTS (e.g., A-band, N-band, or Z-band). That is, in a band other than the configured A-band (or N-band or Z-band), a UL transmission scheduled (via DCI) is skipped/dropped, but CG PUSCH (and/or P-SRS) transmission is not skipped/dropped, and UTS is generated for a band in which the corresponding UL transmission is configured, and when the corresponding transmission is completed, the UTS may be generated again for the original band (which is configured/instructed for UTS). In this case, UTS switching may occur immediately before/after CG PUSCH (and/or P-SRS) UL transmission, or may occur at a start/end point of a slot containing the corresponding UL resource. Alternatively, a specific point in time may be predefined or configured via RRC. The above operation may be stipulated such that (CG PUSCH (and/or P-SRS) transmission in other bands configured at the same time) is allowed only when there is no UL transmission scheduled/instructed (via DCI) for the band (configured/indicated for UTS), otherwise (i.e., when there is a UL transmission scheduled/instructed (via DCI) for the band (configured/instructed for UTS) at the corresponding time), the CG PUSCH (and/or P-SRS) transmission in other bands may be dropped.

[5-9] For periodic SRS transmission, multiple candidates for P-SRS configuration for each band are configured according to a band combination. Afterwards, a specific P-SRS configuration suitable for a band (or band combination) configured/instructed for UTS from among multiple candidates may be applied. Alternatively, P-SRS may be (re) configured simultaneously when a band pair for UTS is instructed (via an indication of the corresponding DCI/MAC-CE). Alternatively, when (re)configuring P-SRS, it may be a UTS band pair (e.g., a band in which P-SRS is configured may be configured to A-band).

[6] Restrictions on configuration/instruction/change of band for UTS

[2-1] The band for UTS (e.g., A-band, N-band, or Z-band) may be restricted not to change too frequently. For example, at most one instruction/change may be allowed during a specific time period T1 (e.g., 1 slot or 14 symbols). When a configuration/instruction/change command for the corresponding band occurs consecutively during T1, a command that occurs again before T1 time elapses after the first occurrence may be disregarded. When T1 is configured in slot and/or symbol units, if the SCS of the bands configured for the UE (or configured for UTS) are mixed, the slot (or symbol) length may be determined based on the smallest SCS. As an embodiment for this,

- The T1 value may be predefined, configured via RRC, or configured together with the corresponding DCI/MAC-CE. Alternatively, the T1 value may be determined from a time an indicator is received to a time a band is changed.
- The start time of T1 may be determined to a time of reception of DCI (or MAC-CE), a time of transmission of ACK for the corresponding indicator, or a time of a band change due to this.

[6-2] UTS triggering may be restricted not to occur immediately after a band for UTS (e.g., A-band, N-band, or Z-band) is configured/instructed/changed. For example, during a certain time T2 (e.g., 1 slot), Tx switching (within the corresponding band pair) may not be allowed. If UTS is triggered before T2 time elapses after configuration/instruction/change for the corresponding band, the UTS triggering may be disregarded. When T2 is configured in slot and/or symbol units, if the SCS of the bands configured for the UE (or configured for UTS) are mixed, the slot (or symbol) length may be determined based on the smallest SCS. As an embodiment for this,

- The T2 value may be predefined, configured via RRC, or configured together with the corresponding DCI/MAC-CE. Alternatively, the T1 value may be determined from a time an indicator is received to a time a band is changed.
- The start time of T2 may be determined to a time of reception of DCI (or MAC-CE), a time of transmission of ACK for the corresponding indicator, or a time of a band change due to this.

The contents of the present disclosure are not limited to transmission and reception of UL and/or DL signals. For example, the contents of the present disclosure may also be used in direct communication between UEs. A BS in the present disclosure may be a concept that includes not only a BS but also a relay node. For example, an operation of the BS in the present disclosure may be performed by the BS, but may also be performed by the relay node.

It is obvious that the examples of the proposed method described above may also be included as one of the implementation methods of the present disclosure, and thus may be considered as a kind of proposed method. The proposed methods described above may be implemented independently, but may also be implemented in the form of a combination (or merge) of some proposed methods. A rule may be defined such that information on whether the proposed methods are applicable (or information on the rules of the proposed methods) is reported by the BS to the UE or by a receiving UE to a receiving UE through a predefined signal (e.g., physical layer signal or higher layer signal).

Implementation example

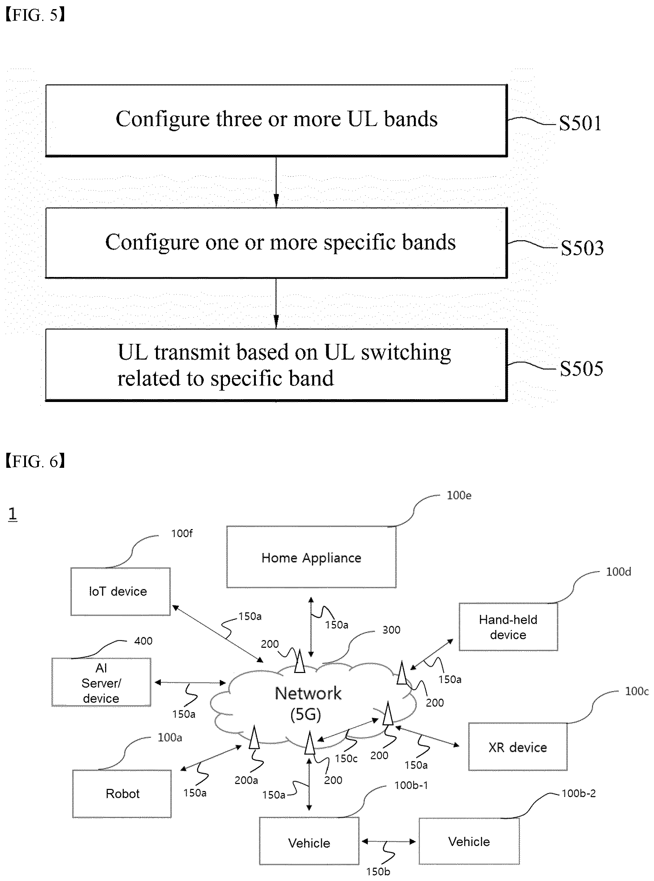

FIG. 5 is a flowchart of a signal transmission and reception method according to embodiments of the present disclosure.

Referring to FIG. 5, the signal transmission and reception method according to an embodiment of the present disclosure may be performed by a UE and may include configuring three or more (at least three) UL bands (S501), configuring one or more (at least one) specific band (S503), and performing UL transmission based on UL transmission based on UL switching related to the specific band (S505).

In addition to the operation of FIG. 5, one or more of the operations described in sections [1] to [6] may be performed.

At least one specific band may be an A-band, an N-band, and/or a Z-band.

In detail, when at least one specific band includes the A-band, UL switching is performed only in a band pair that includes the A-band from among the configured UL bands. If at least one specific band includes the A-band and one or more N-bands, UL switching is performed only in a band pair including the A-band and one N-band from among the configured UL bands. If at least one specific band includes two or more Z-bands, UL switching is performed only in a band pair that includes two Z-bands from among the configured UL bands.

Referring to sections [1] and [4], a Tx chain may be switched to an initial state when a specific band is configured. For example, if there is one specific band, two Tx chains may be switched to the specific band. If there are two or more specific bands, the two Tx chains may be switched to two of the two or more specific bands, one by one.

Referring to sections [2] and [4], a default band (fallback band) may be configured for a specific band. A timer for fallback may be configured. The timer starts based on a specific band being configured as a non-default band, and when the timer expires, the specific band changes to the default band. For example, if band 1 is configured as the default band for the A-band, and the A-band is configured to band 2 instead of band 1, the timer starts. When the timer expires, the A-band changes from band 2 to band 1. The same applies if the default band is configured for the N-band or Z-band.

Referring to section [5], only a periodic resource in a corresponding specific band may be transmitted, and a periodic resource configured in a band other than the specific band may be deactivated. Therefore, UL transmission in FIG. 5 is performed based on a first periodic resource configured in a specific band, and a second periodic resource configured in a band other than the specific band is deactivated. Here, the periodic resource may be the CG PUSCH of section [5-1] and/or the P-SRS resource of section [5-2].

Referring to section [5-4], when a specific band is changed (or reconfigured) from a first band to a second band, the first periodic resource configured in the first band is configured identically in the second band. The periodic resources configured in the second band may use the values (or configured values) of the RRC parameters used for configuring the first periodic resource without change. However, if a periodic resource of the same type as the first periodic resource is configured in the second band, the same resource as the first periodic resource is not configured, and the preconfigured periodic resource may be used. Here, the case of the same type of resource means that both periodic resources configured in the first and second bands are CG PUSCH resources or are P-SRS resources. In contrast, even if a periodic resource of the same type as the first periodic resource is already configured in the second band, a periodic resource having the same configured value as the second periodic resource may be configured regardless.

In addition to the operation described with respect to FIG. 5, one or more of the operations described with respect to FIGS. 1 to 4 and/or the operations described in sections [1] to [6] may be additionally performed in combination.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 6 illustrates a communication system 1 applied to the present disclosure.

Referring to FIG. 6, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

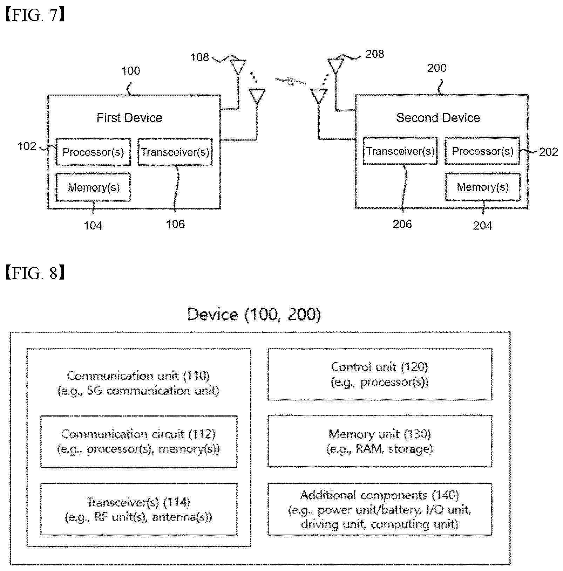

FIG. 7 illustrates wireless devices applicable to the present disclosure.

Referring to FIG. 7, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 6.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

FIG. 8 illustrates another example of a wireless device applied to the present disclosure. The wireless device may be implemented in various forms according to a use case/service (refer to FIG. 6).

Referring to FIG. 8, wireless devices 100 and 200 may correspond to the wireless devices 100 and 200 of FIG. 7 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 7. For example, the transceiver(s) 114 may include the one or more transceivers 106 and 206 and/or the one or more antennas 108 and 208 of FIG. 7. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 6), the vehicles (100b-1 and 100b-2 of FIG. 6), the XR device (100c of FIG. 6), the hand-held device (100d of FIG. 6), the home appliance (100e of FIG. 6), the IoT device (100f of FIG. 6), a digital broadcasting terminal, a hologram device, a public safety device, an MTC device, a medical device, a FinTech device (or a finance device), a security device, a climate/environment device, the AI server/device (400 of FIG. 6), the BSs (200 of FIG. 6), a network node, or the like. The wireless device may be mobile or fixed according to a use case/service.

In FIG. 8, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

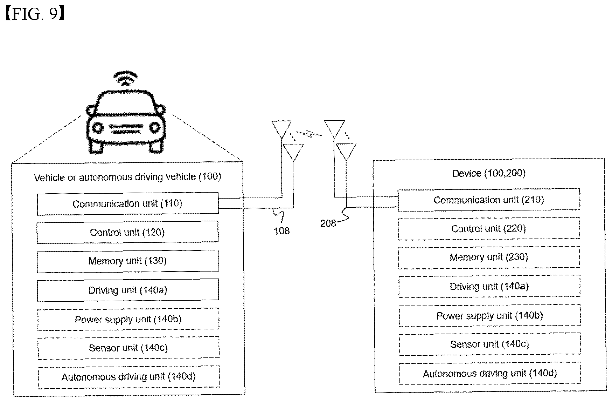

FIG. 9 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 9, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 8, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on.

The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

As described above, the present disclosure is applicable to various wireless communication systems.

**Claims**

1. A method of transmitting and receiving a signal by a user equipment (UE) in a wireless communication system, the method comprising:

   configuring at least three uplink (UL) bands;
   configuring at least one specific band from among the at least three UL bands; and
   performing UL transmission based on UL switching related to the at least one specific band,
   wherein the UL transmission is performed based on a first periodic resource configured in the at least one specific band, and
   based on the at least one specific band being configured, a second periodic resource configured in a band other than the at least one specific band is deactivated.

2. The method of claim 1, wherein the first periodic resource includes a configured grant (CG) physical uplink shared channel (PUSCH) resource or a periodic sounding reference signal (SRS) resource.

3. The method of claim 1, wherein the at least one specific band includes an anchor (A)-band, and
   the UL switching is performed only in a band pair including the A-band, based on the A-band being configured.

4. The method of claim 1, wherein the at least one specific band includes an anchor (A)-band and one or more non-anchor (N)-bands, and
   the UL switching is performed only in a band pair including the A-band and one of the one or more N-bands, based on the A-band and the one or more N-bands being configured.

5. The method of claim 1, wherein the at least one specific band includes two or more Z-bands, and
   the UL switching is performed only in a band pair including two of the two or more Z-bands, based on the two or more Z-bands being configured.

6. The method of claim 1, wherein, based on the at least one specific band being reconfigured from a first band to a second band, the first periodic resource is configured identically to a second band.

7. The method of claim 1, wherein, based on the at least one specific band being reconfigured from a first band to a second band and a third periodic resource of the same type as the first periodic resource being preconfigured in the second band, a signal related to the first periodic resource is transmitted through the third periodic resource.

8. The method of claim 1, wherein, based on a number of the at least one specific band being one, two transmission chains are switched to the one specific band.

9. The method of claim 1, wherein, based on a number of the at least one specific band being two or more, two transmission chains are switched one by one to two specific bands from among the two or more specific bands.

10. The method of claim 1, wherein, based on the at least one specific band being configured in a default band and the at least one specific band being configured in a band other than the default band, a timer is started, and based on expiration of the timer, the at least one specific band is changed to the default band.

11. A user equipment (UE) for transmitting and receiving a signal in a wireless communication system, the UE comprising:

at least one transceiver;
at least one processor; and
at least one memory operably connected to the at least one processor and storing instructions that, when executed, cause the at least one processor to perform a specific operation,
wherein the specific operation includes:

configuring at least three uplink (UL) bands;
configuring at least one specific band from among the at least three UL bands; and
performing UL transmission based on UL switching related to the at least one specific band,
the UL transmission is performed based on a first periodic resource configured in the at least one specific band, and
based on the at least one specific band being configured, a second periodic resource configured in a band other than the at least one specific band is deactivated.

12. A device for a user equipment (UE), the device comprising:

at least one processor; and
at least one computer memory operably connected to the at least one processor and configured to, when executed, cause the at least one processor to perform an operation including:

configuring at least three uplink (UL) bands;
configuring at least one specific band from among the at least three UL bands; and
performing UL transmission based on UL switching related to the at least one specific band,
the UL transmission is performed based on a first periodic resource configured in the at least one specific band, and
based on the at least one specific band being configured, a second periodic resource configured in a band other than the at least one specific band is deactivated.

13. A computer-readable nonvolatile storage medium including at least one computer program that causes a user equipment (UE) including at least one processor to perform an operation, the operation comprising:

configuring at least three uplink (UL) bands;
configuring at least one specific band from among the at least three UL bands; and
performing UL transmission based on UL switching related to the at least one specific band,
wherein the UL transmission is performed based on a first periodic resource configured in the at least one specific band, and
based on the at least one specific band being configured, a second periodic resource configured in a band other than the at least one specific band is deactivated.

【FIG. 1】

| | One Frame (10ms) | |
|---|---|---|
| · · · · · · | | · · · · · · |

| | Half-Frame (5ms) | Half-Frame (5ms) | |
|---|---|---|---|
| · · · · · · | | | · · · · · · |

| | Subframe 0 (1ms) | | Subframe 4 (1ms) | Subframe 5 (1ms) | | Subframe 9 (1ms) | |
|---|---|---|---|---|---|---|---|
| · · · · · · | | · · · · · · | | | · · · · · · | | · · · · · · |

Subframe (1ms)

**15KHz**

| Slot (14 symbols) |
|---|

1ms

**30KHz**

| Slot 0 (14 symbols) | Slot 1 |
|---|---|

500us

**60KHz**

| Slot 0 (14 symbols) | Slot 1 | Slot 2 | Slot 3 |
|---|---|---|---|

250us

**120KHz**

| Slot 0 (14 symbols) | Slot 1 | Slot 2 | Slot 3 | Slot 4 | Slot 5 | Slot 6 | Slot 7 |
|---|---|---|---|---|---|---|---|

125us

【FIG. 2】

【FIG. 3】

【FIG. 4】

Previous transmission          Current transmission

(a)

Previous transmission          Current transmission

(b)

【FIG. 5】

```
┌─────────────────────────────────────┐
│   Configure three or more UL bands   │────S501
└─────────────────────────────────────┘
                   │
                   ▼
┌─────────────────────────────────────┐
│   Configure one or more specific bands │────S503
└─────────────────────────────────────┘
                   │
                   ▼
┌─────────────────────────────────────┐
│   UL transmit based on UL switching   │────S505
│      related to specific band        │
└─────────────────────────────────────┘
```

【FIG. 6】

【FIG. 7】

【FIG. 8】

Device (100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

【FIG. 9】

Vehicle or autonomous driving vehicle (100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

Device (100,200)

| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| International application No. |
|---|
| **PCT/KR2023/011822** |

| A. | CLASSIFICATION OF SUBJECT MATTER |
|---|---|

**H04W 72/04**(2009.01)i; **H04W 72/23**(2023.01)i; **H04W 72/12**(2009.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04W 72/04(2009.01); H04W 48/12(2009.01); H04W 72/12(2009.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: uplink switching, three bands, CG PUSCH resource, SRS resource, anchor band, deactivate, timer

| C. | DOCUMENTS CONSIDERED TO BE RELEVANT |
|---|---|

| Category* | Citation of document, with indication, where appropriate, of the relevant passages | Relevant to claim No. |
|---|---|---|
| X <br> Y | ERICSSON. On CA/DC support for DMRS bundling. R4-2213247, 3GPP TSG-RAN WG4 Meeting # 104-e, Electronic Meeting. 10 August 2022. <br> See section 2. | 1,11-13 <br> 2-10 |
| Y | HUAWEI et al. Discussion on Multi-carrier enhancements. R4-2213628, 3GPP TSG-RAN WG4 Meeting #104-e, Electronic Meeting. 10 August 2022. <br> See section 2.3; and figures 1, 4 and 10. | 2-9 |
| Y | US 2019-0044678 A1 (FUTUREWEI TECHNOLOGIES, INC.) 07 February 2019 (2019-02-07) <br> See paragraph [0088]; and claim 1. | 10 |
| A | QUALCOMM INCORPORATED. UL TX switching schemes for multiple TAGs. R4-2214043, 3GPP TSG-RAN4 Meeting #104-e. 10 August 2022. <br> See sections 2-3.2. | 1-13 |
| A | US 2022-0086875 A1 (HUAWEI TECHNOLOGIES CO., LTD.) 17 March 2022 (2022-03-17) <br> See paragraphs [0259]-[0314]; and claim 1. | 1-13 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 November 2023** | **24 November 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/011822**

| Patent document cited in search report | | | Publication date (day/month/year) | Patent family member(s) | | | Publication date (day/month/year) |
|---|---|---|---|---|---|---|---|
| US | 2019-0044678 | A1 | 07 February 2019 | CA | 3019646 | A1 | 05 October 2017 |
| | | | | CN | 108886457 | A | 23 November 2018 |
| | | | | CN | 108886457 | B | 30 November 2021 |
| | | | | CN | 114710242 | A | 05 July 2022 |
| | | | | EP | 3433968 | A1 | 30 January 2019 |
| | | | | EP | 3433968 | B1 | 27 April 2022 |
| | | | | JP | 2019-514268 | A | 30 May 2019 |
| | | | | JP | 2020-099057 | A | 25 June 2020 |
| | | | | JP | 6651650 | B2 | 19 February 2020 |
| | | | | JP | 6974513 | B2 | 01 December 2021 |
| | | | | KR | 10-2018-0128043 | A | 30 November 2018 |
| | | | | KR | 10-2188674 | B1 | 08 December 2020 |
| | | | | US | 10270570 | B2 | 23 April 2019 |
| | | | | US | 10693610 | B2 | 23 June 2020 |
| | | | | US | 11476989 | B2 | 18 October 2022 |
| | | | | US | 2017-0302419 | A1 | 19 October 2017 |
| | | | | US | 2020-0322108 | A1 | 08 October 2020 |
| | | | | US | 2023-0208578 | A1 | 29 June 2023 |
| | | | | WO | 2017-173388 | A1 | 05 October 2017 |
| | | | | WO | 2017-173388 | A8 | 19 April 2018 |
| US | 2022-0086875 | A1 | 17 March 2022 | CN | 112020139 | A | 01 December 2020 |
| | | | | CN | 112020139 | B | 22 August 2023 |
| | | | | EP | 3979539 | A1 | 06 April 2022 |
| | | | | WO | 2020-239041 | A1 | 03 December 2020 |

Form PCT/ISA/210 (patent family annex) (July 2022)